(19) Europäisches Patentamt
European Patent Office
Office européen des brevets

(11) **EP 2 366 882 A1**

(12) **EUROPEAN PATENT APPLICATION**
published in accordance with Art. 153(4) EPC

(43) Date of publication:
**21.09.2011 Bulletin 2011/38**

(51) Int Cl.:
*F02D 45/00* (2006.01)    *G01M 15/04* (2006.01)

(21) Application number: **09831910.6**

(22) Date of filing: **08.12.2009**

(86) International application number:
**PCT/JP2009/070565**

(87) International publication number:
**WO 2010/067806 (17.06.2010 Gazette 2010/24)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.12.2008 JP 2008312630**

(71) Applicant: **Mitsubishi Heavy Industries, Ltd. Tokyo 108-8215 (JP)**

(72) Inventors:
• **DEGUCHI, Yoshihiro**
  **Nagasaki, Nagasaki-ken 851-0392 (JP)**
• **KAWAZOE, Kohei**
  **Nagasaki, Nagasaki-ken 851-0392 (JP)**
• **YAMAMURA, Taketoshi**
  **Nagasaki, Nagasaki-ken 851-0392 (JP)**
• **OSAFUNE, Shinnosuke**
  **Nagasaki, Nagasaki-ken 851-0392 (JP)**
• **WATANABE, Kei**
  **Kobe, Hyogo-ken 652-8585 (JP)**

(74) Representative: **HOFFMANN EITLE**
**Patent- und Rechtsanwälte**
**Arabellastraße 4**
**81925 München (DE)**

(54) **SYSTEM FOR CONTROLLING SOUNDNESS OF DIESEL ENGINE FUEL AND METHOD FOR ASSESSING SOUNDNESS OF DIESEL ENGINE FUEL**

(57) A diesel engine fuel soundness control system includes: a density measuring instrument 11 that measures a density of a fuel F of a diesel engine (D/E) in real time; a micro carbon residue (MCR) measuring instrument 12 that measures an MCR in the fuel F of the diesel engine (D/E) in real time; and a control device (CPU) 13 that changes an operation mode of the diesel engine when values of the density and the micro carbon residue (MCR) of the fuel F are obtained and an obtained result is out of a range of soundness of a density-to-MCR characteristic map obtained in advance.

FIG.1

## Description

Field

The present invention relates to a diesel engine fuel soundness control system and a diesel engine fuel soundness evaluation method capable of appropriately handling a case of an inferior fuel or the like. Background

There has been a problem of decreased reliability due to an increase in thermal load on a combustion chamber in a diesel engine as a result of accepting a fuel inferior in its ignition quality and combustibility (so-called inferior fuel).

Meanwhile, a diesel engine, particularly a diesel engine using heavy oil as its fuel has the problem of decreased reliability resulting from fuel properties. However, it is difficult to perform an abnormality diagnosis because of the presence of many parameters of the fuel properties and lack of a technique for monitoring the fuel properties online.

Conventionally, there has been known, as a diesel engine abnormality diagnosis, a method of performing an abnormality diagnosis on a diesel engine with a combustion pressure used as an index. However, with this conventional method, fuel properties cannot be recognized directly, so that it is difficult to accurately recognize the abnormality of the diesel engine as the abnormality diagnosis.

Furthermore, for fuel properties of heavy oil or the like, MCR (micro carbon residue) is an important parameter. However, with the conventional measurement method, because samples are collected and measured, it takes a long time before a measurement result comes out, it is difficult to automate the process, and the fuel properties cannot be monitored online.

The conventional MCR measurement is specified in JIS K 2270 (Non Patent Literature 1).

The MCR (micro carbon residue) is explained below. Coke carbon residue produced after evaporation and pyrolysis of samples in a state of poor air supply is referred to as "carbon residue" and represented by weight%. Types of this test method for carbon residue include "Conradson method" and "Micro method" specified in JIS K 2270.

The "Conradson method" is a method of determining an amount of carbon residue by using a specified Conradson carbon residue tester, measuring and collecting 3 to 10 grams of samples in a crucible, preheating the samples under specified conditions, heating generated oil vapor, igniting residue and cooling the residue in air, and weighing the residue after ignition and cooling.

Meanwhile, the "Micro method" is a method of determining an amount of carbon residue by using a specified micro carbon residue tester, measuring and collecting 0.15 to 5 grams of samples in a test vial, putting the samples in a coking furnace and substituting an interior of the furnace with a nitrogen atmosphere, weighing the samples after preheating, heating, and cooling in the air under specified conditions.

Citation List

Non Patent Literature

Non Patent Literature 1: JIS K 2270

Summary

Technical Problem

However, the test methods specified in the JIS are actually batch-process based and do not allow online analysis to be performed by automation.

In recent years, as for inferior fuels, if an inferior fuel or the like the density of which has been only prepared passes a density test in an acceptance test, the inferior fuel or the like is often accepted as a fuel for a large vessel, for example, while the composition of the fuel remains unknown and problems of ignition quality and combustibility of an engine occur to the vessel under way.

Therefore, it has been desired that, even when a diesel engine particularly for a ship accepts a fuel inferior in ignition quality and combustibility (so-called inferior fuel), it is possible to promptly deal with problems, to prevent decreased reliability resulting from an increase in thermal load on a combustion chamber, and to improve reliability of the engine of the vessel under way.

The present invention has been achieved in view of the above problems, and an object of the present invention is to provide a diesel engine fuel soundness control system and a diesel engine fuel soundness evaluation method capable of, even when a diesel engine for, for example, a vessel accepts a fuel inferior in ignition quality and combustibility, preventing decreased reliability of the engine due to an increase in thermal load on a combustion chamber in the ship under way online, and improving the reliability of the engine.

Solution to Problem

According to an aspect of the present invention, a diesel engine fuel soundness control system includes: a density measuring instrument that measures a density of a fuel of a diesel engine in real time; a micro carbon residue (MCR) measuring instrument that measures an MCR in a fuel of a diesel engine in real time; and a control device that changes an operation mode of a diesel engine if measured values of the density and the micro carbon residue (MCR) of the fuel are out of a range of soundness of a density-to-MCR characteristic map obtained in advance.

Advantageously, in the diesel engine fuel soundness control system, the density of the fuel is measured by an ultrasonic wave velocity meter or a dielectric constant meter.

Advantageously, in the diesel engine fuel soundness control system, a measurement result of the density measuring instrument is subjected to temperature calibration.

Advantageously, in the diesel engine fuel soundness control system, a micro carbon residue (MCR) is obtained by an intensity ratio of light transmission of the fuel.

According to another aspect of the present invention, a diesel engine fuel soundness evaluation method includes: measuring a density and a micro carbon residue (MCR) of a fuel of a diesel engine in real time; obtaining values of the density and the micro carbon residue (MCR) of the fuel; and changing an operation mode of the diesel engine when an obtained result indicates that values of the density and the micro carbon residue (MCR) of the fuel are out of a range of soundness.

Advantageously, in the diesel engine fuel soundness evaluation method, a range of the soundness satisfies a density $(D)=X1 \times MCR-X2 \pm X3$, where X1 denotes a proportional coefficient, X2 denotes a density coefficient, and X3 denotes a fuel permissible range coefficient.

It is preferable that the diesel fuel is used for a marine or land fuel.

Advantageous Effects of Invention

According to the present invention, by using the density measuring instrument that measures the density of the fuel for the diesel engine in real time and the MCR measuring instrument that measures the micro carbon residue (MCR) in the fuel F for the diesel engine in real time, values of the density and the micro carbon residue (MCR) of the fuel F are obtained, and the operation mode of the diesel engine is changed when the values of the density and the MCR are out of the range of soundness of the density-to-MCR characteristic map obtained in advance. Therefore, it is possible to change the operation mode of the diesel engine online according to fuel properties, to prevent decreased reliability due to an increase in heat load applied to the combustion chamber, and to improve the reliability of the engine.

Brief Description of Drawings

FIG. 1 depicts a diesel engine fuel soundness control system.
FIG. 2A is a schematic diagram of an ultrasonic wave velocity meter.
FIG. 2B depicts a measurement result of an ultrasonic wave velocity.
FIG. 3 is a relational diagram between an ultrasonic wave velocity and a density.
FIG. 4 is a relational diagram of temperature dependence between an ultrasonic wave velocity and a density.
FIG. 5 is a relational diagram between a density calculated from an ultrasonic wave velocity and a measured value.
FIG. 6 is a schematic diagram of a dielectric constant meter.
FIG. 7 is a relational diagram between a dielectric constant and a density.
FIG. 8 is a schematic diagram of an MCR measurement instrument.
FIG. 9 depicts a measurement result of transmission ratios to wavelengths 400 nanometers to 1000 nanometers for concentration differences of MCRs (A: MCR<0.01 wt%, B: MCR=0.04 wt%, C: MCR=0.3 wt%, and D: MCR=0.87 wt%), respectively.
FIG. 10 depicts a measurement result of absorption wavelength ranges and light absorption of benzene (hydrocarbon consisting of one ring) to pentacene (hydrocarbon consisting of five rings).
FIG. 11 is a relational diagram between a light transmission-to-intensity ratio obtained in advance and an MCR.
FIG. 12 is a relational diagram between an MCR calculated from a light transmission-to-intensity ratio and a measured MCR.
FIG. 13 depicts a measurement result of fluorescence intensity ratios to wavelengths 400 nanometers to 1000 nanometers for concentration differences of MCRs (E: MCR<0.01 wt%, F: MCR=0.04 wt%, and G: MCR=0.87 wt%), respectively.

FIG. 14 is a density-to-MCR characteristic map obtained in advance.

FIG. 15 is a process diagram of steps of evaluating fuel soundness.

Description of Embodiments

The present invention will be explained below in detail with reference to the accompanying drawings. The present invention is not limited to the embodiments. In addition, constituent elements in the following embodiments include those that can be easily assumed by persons skilled in the art or that are substantially equivalent. Embodiments

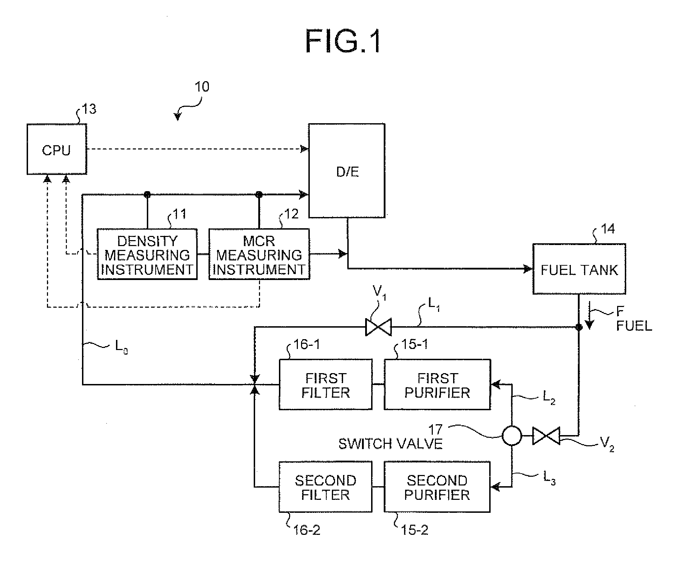

A diesel engine fuel soundness control system according to an embodiment of the present invention is described with reference to the drawings. FIG. 1 depicts the diesel engine fuel soundness control system according to the present embodiment.

As shown in FIG. 1, a diesel engine fuel soundness control system 10 includes a density measuring instrument 11 that measures a density of a fuel F of a diesel engine (D/E) in real time, an MCR (micro carbon residue) measuring instrument 12 that measures an MCR in the fuel F of the diesel engine (D/E) in real time, the density measuring instrument 11 and the MCR measuring instrument 12 being interposed in a fuel line $L_0$, and a control device (CPU) 13 that changes a diesel engine operation mode when values of the density and the micro carbon residue (MCR) of the fuel F are obtained and the values are out of a range of soundness of a density-to-MCR characteristic map obtained in advance.

In FIG. 1, reference numeral 14 denotes a fuel tank.

The density of the fuel F can be measured by, for example, an ultrasonic wave velocity meter or a dielectric constant meter.

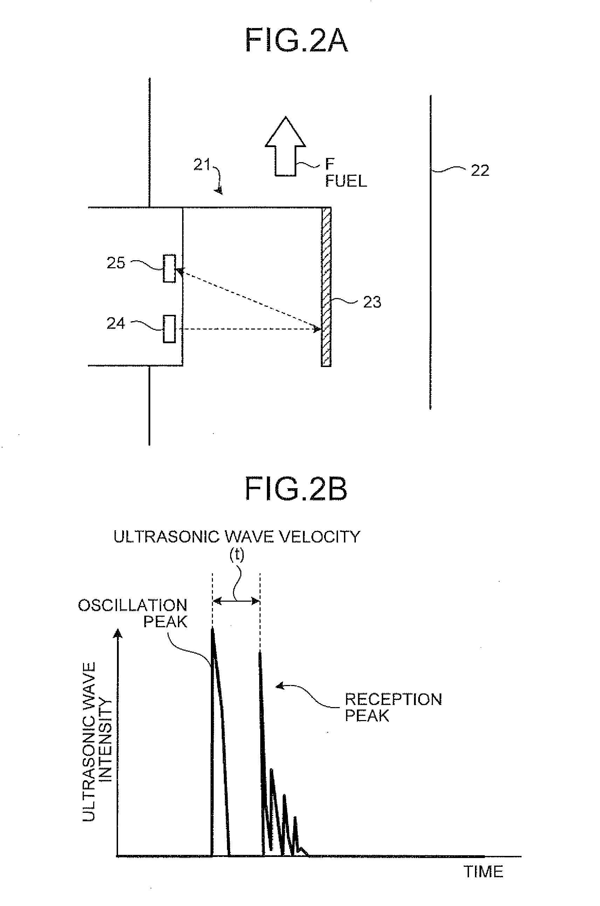

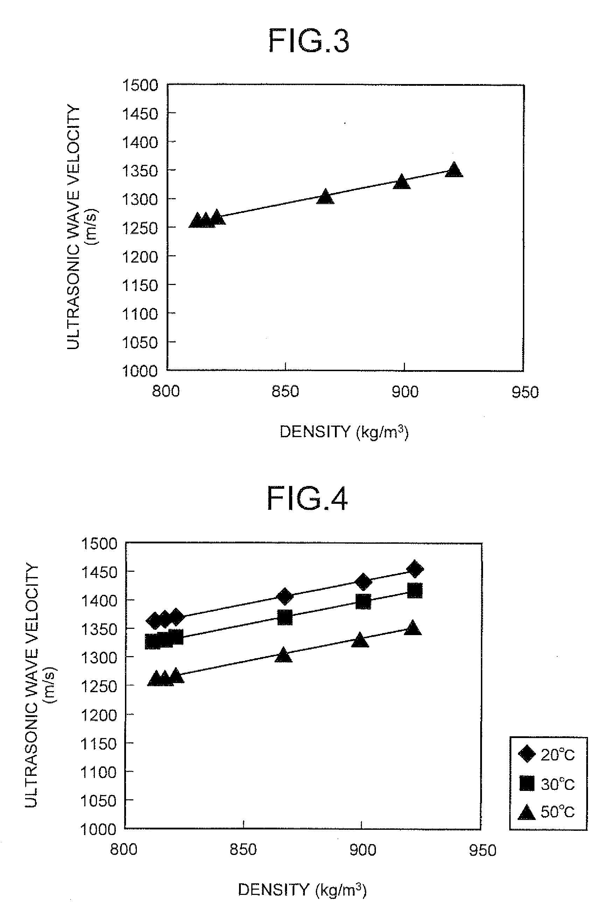

FIG. 2A is a schematic diagram of the ultrasonic wave velocity meter. As shown in FIG. 2A, an ultrasonic-wave velocity meter 21 is configured to include a reflecting unit 23 inserted into a fuel sampling tube 22, an ultrasonic oscillator unit 24 that oscillates an ultrasonic wave with respect to the reflecting unit 23, and a receiver unit 25 that receives a reflected ultrasonic wave. FIG. 2B depicts an ultrasonic measurement result obtained by the ultrasonic-wave velocity meter 21. FIG. 3 is a relational diagram between an ultrasonic wave velocity and a density. As shown in FIG. 2B, a time difference between an oscillation peak and a reception peak is calculated as an ultrasonic wave velocity (t). As shown in FIG. 3, the density can be calculated from a calibration curve of the ultrasonic wave velocity to the density obtained in advance.

In this case, it is more preferable to perform temperature calibration on the density because the density changes according to a temperature change of the fuel. FIG. 4 is a relational diagram between the ultrasonic wave velocity and the density at various temperatures (20°C, 30°C, and 5Q°C) , respectively.

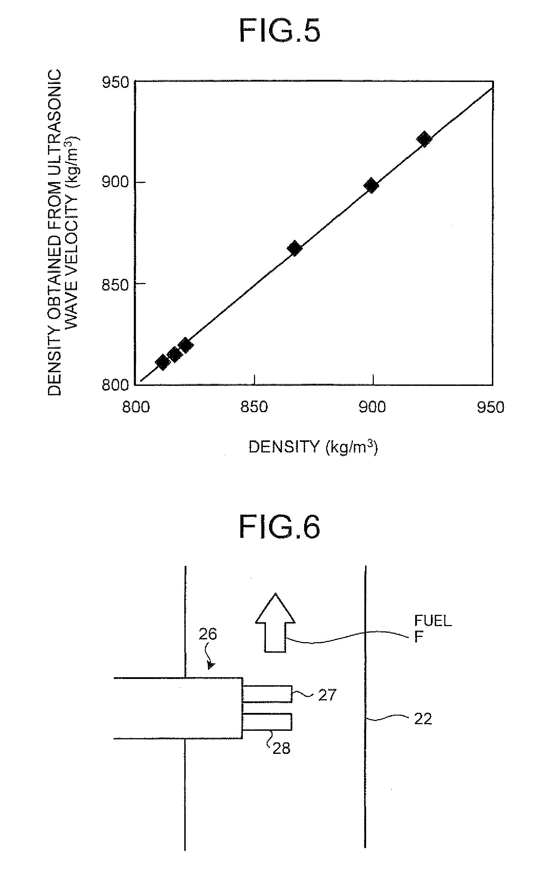

It has been confirmed here that the relation between the density calculated from the ultrasonic wave velocity and the density (measured value) is a good correlation as shown in FIG. 5.

As shown in FIG. 6, a dielectric constant meter 26 can be also used. This dielectric constant meter 26 is configured to include a pair of a detection electrode 27 and an earth electrode 28.

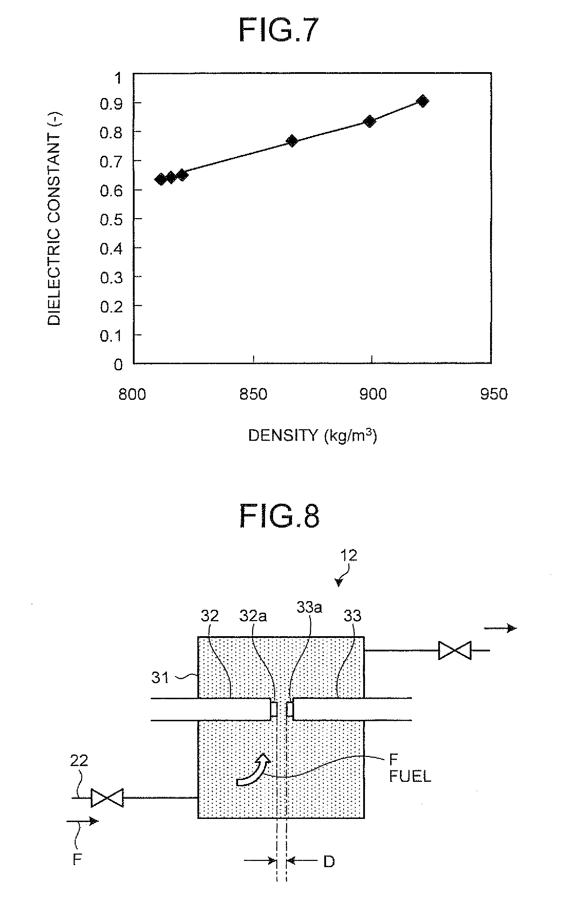

FIG. 7 is a calibration curve diagram between the dielectric constant and the density obtained in advance. The density can be calculated from FIG. 7.

FIG. 8 is a schematic diagram of the MCR measurement instrument.

As shown in FIG. 8, the MCR measurement instrument 12 is configured to include a measurement container 31 interposed in the fuel sampling tube 22, and a pair of an incidence unit 32 and a light receiving unit 33 inserted into the measurement container 31. Light at 400 to 1000 nanometers is irradiated from an incidence optical fiber 32a of the incidence unit 32 onto the light receiving unit 33, a light-receiving optical fiber 33a of the light receiving unit 33 receives the light, and a detector (not shown) measures a light transmission of the fuel F.

In FIG. 8, reference sign D denotes a gap between the incidence optical fiber 32a and the light-receiving optical fiber 33a. This gap D is equal to or smaller than several millimeters, preferably equal to or smaller than 1 millimeter, more preferably 0.5 millimeter to 1 millimeter. This is because light cannot be received if the gap is too wide.

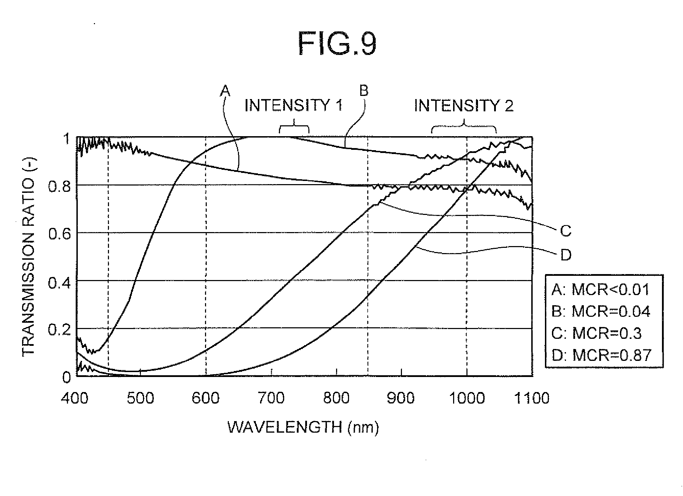

FIG. 9 depicts a measurement result of transmission ratios to wavelengths 400 nanometers to 1000 nanometers for concentration differences of MCRs (A: MCR<0.01 wt%, B: MCR=0.04 wt%, C: MCR=0.3 wt%, and D: MCR=0.87 wt%) of fuel, respectively.

As shown in FIG. 9, a fuel having a smaller MCR value more likely has an absorption peak on a short-wavelength side.

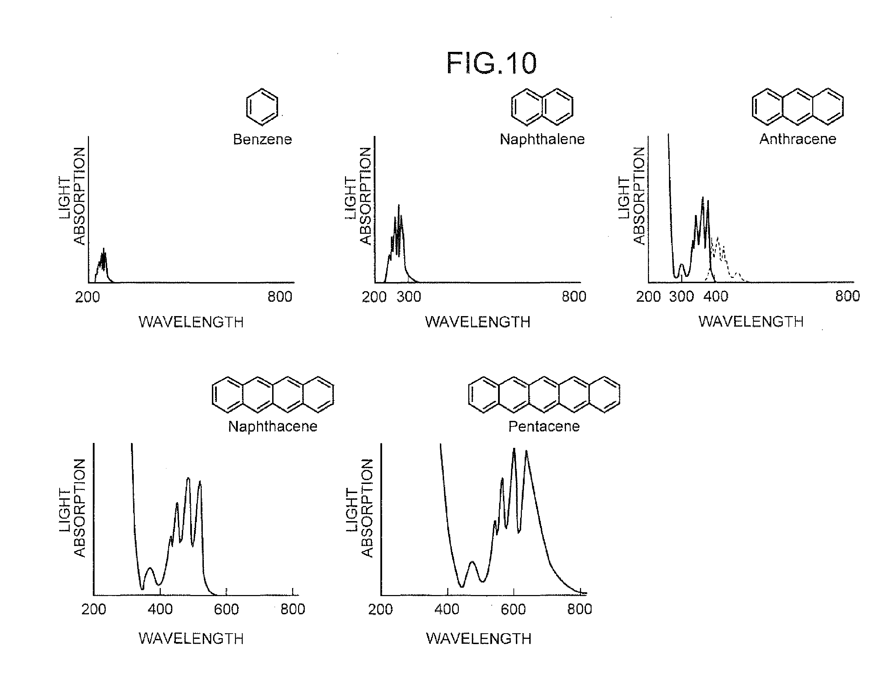

As described above, a change in a transmission curve according to a change in the MCR derives from a size of aromatic rings. FIG. 10 depicts a state that absorption wavelength ranges of benzene (hydrocarbon consisting of one ring) to pentacene (hydrocarbon consisting of five rings) gradually change to long-wavelength ranges. Accordingly, when a ratio of substances having fewer rings superior in combustibility is high in a fuel, the absorption peak of the fuel is closer to the short-wavelength side and exhibits a behavior shown in FIG. 10.

An example of how to calculate the MCR is explained below.

Micro carbon residue (MCR) is calculated from intensity ratios of light transmissions of a fuel. Each intensity ratio is measured by adding intensities at transmissions of at least two predetermined wavelength ranges and the intensity ratios are compared.

In FIG. 9, an intensity 1 is a result of adding intensities at wavelengths between 725 nanometers and 775 nanometers, and an intensity 2 is a result of adding intensities at wavelengths between 950 nanometers and 1100 nanometers.

Further, a relation between (intensity 2)/(intensity 1) and the MCR is obtained in advance, and the MCR is calculated from a result of the measured (intensity 2)/(intensity 1).

The MCR is not influenced by an absolute value of the transmission.

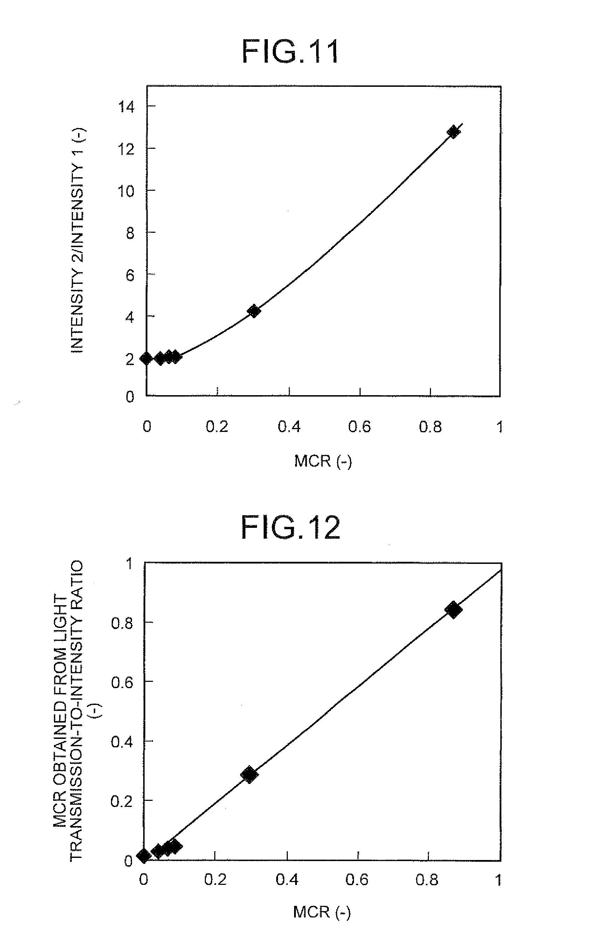

FIG. 11 is a relational diagram between the light transmission-to-intensity ratio obtained in advance and the MCR. As described above, the relation between the (intensity 2)/((intensity 1) and the MCR is obtained in advance, and the MCR is calculated from the measured (intensity 2)/(intensity 1).

The intensity 1 is set in a range from 725 to 775 nanometers and the intensity 2 is set in a range from 950 to 1050 nanometers, and the MCR can be calculated from the following Equation (1).

$$\mathtt{MCR} = \alpha(\text{intensity 2})/(\text{intensity 1} - \gamma)^{\beta} \quad \cdots \quad (1)$$

In this equation, $\alpha$ is a proportional coefficient ($\alpha$=0.14, $\beta$ is a linear correction coefficient ($\beta$=0.7), and $\gamma$ is a zero correction coefficient ($\gamma$=1.95).

The MCR can be calculated as follows other than the calculation based on the two wavelength ranges.

The intensity 1 is set in a range from 550 to 650 nanometers, the intensity 2 is set in a range from 750 to 850 nanometers, the intensity 3 is set in a range from 950 to 1050 nanometers, and the MCR can be calculated from the following Equation (2). These coefficients are identical to those in the Equation (1).

$$\mathtt{MCR} = \alpha1(\text{intensity 2}/\text{intensity 1} - \gamma1)^{\beta1} + \alpha2(\text{intensity 3}/\text{intensity 1} - \gamma1)^{\beta2} \quad \cdots \quad (2)$$

Selection of wavelengths described above is only an example. When two wavelength ranges are used, it suffices to set the intensity 1 by adding intensity ratios in a predetermined range on a short-wavelength side from 400 to 800 nanometers and set the intensity 2 by adding intensity ratios in a predetermined range on a long-wavelength side from 500 to 1100 nanometers.

Moreover, when three wavelength ranges are used, it suffices to set the intensity 1 by adding intensity ratios in a predetermined range of a short-wavelength side from 400 to 700 nanometers, set the intensity 2 by adding intensity ratios in a predetermined range of a middle-wavelength side from 700 to 900 nanometers, and set the intensity 3 by adding intensity ratios in a predetermined range of a long-wavelength side from 900 to 1100 nanometers. The MCR can be calculated to satisfy a relation of (intensity 2/intensity 1)+(intensity 3/intensity 1).

The micro carbon residue (MCR) can be also calculated by comparing specific two or more wavelengths (for example, the intensity 1 is set to 725 nanometers and the intensity 2 is set to 950 nanometers) without using predetermined wavelength ranges.

While FIG. 12 is a relational diagram between the MCR calculated from the light transmission-to-intensity ratio and the measured MCR, the relational diagram exhibits a good correlation.

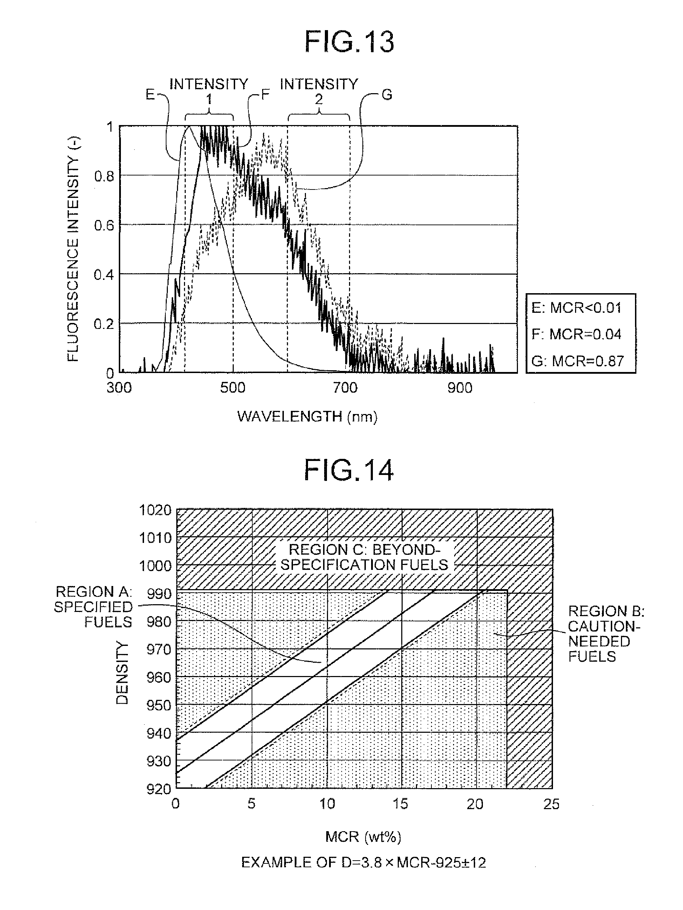

FIG. 13 depicts a measurement result of fluorescence intensity ratios to wavelengths 400 nanometers to 1000 nanometers for concentration differences of MCRs (E: MCR<0.01 wt%, F: MCR=0.04 wt%, and G: MCR=0.87 wt%), respectively.

As shown in FIG. 13, the MCR can be calculated from fluorescence intensity instead of the light intensity (E: MCR<0.01 wt%, F: MCR=0.04 wt%, and G: MCR=0.87 wt%). In FIG. 13, it is assumed, for example, that the intensity 1 is a value from 400 to 500 nanometers and the intensity 2 is a value from 600 to 700 nanometers.

Furthermore, a result of calculating values of the density and the micro carbon residue (MCR) of the fuel F are applied to a density-to-MCR characteristic map obtained in advance and shown in FIG. 14. When the result is within a range of soundness (an outline part in FIG. 14), it is determined that the fuel is sound. On the other hand, when the result is out of the range of soundness (a shaded part in FIG. 14), it is determined that soundness of the fuel deteriorates. When the result is out of the range of soundness and in a range in which the density is equal to or higher than 990 (kg/cm$^3$) and the MCR is equal to or higher than 22 (wt%), it is determined that the fuel is beyond specification.

According to the determination result, the control device 13 changes a diesel engine operation mode.

It is defined that a density (D)=3.8X1×MCR-X2±X3 in the range of soundness.

In this definition, X1 denotes a proportional coefficient (X1=3.8), X2 denotes a density coefficient (X2=925), and X3 denotes a fuel permissible range coefficient (X3=12).

It is possible to tighten or relax a restriction range by increasing or decreasing the fuel permissible range coefficient X3. In this manner, the density and the MCR are calculated as the range of soundness, and the MCR is calculated from $D=3.8\times MCR-925\pm12$ as shown in FIG. 14.

In FIG. 14, a region A indicates a region of specified fuels (favorable fuel). A region B indicates a region of caution-needed fuels. A region C indicates a region of beyond-specification fuels.

In this case, to change the diesel engine operation mode means at least one of to change an operation mode of the engine (for example, to a mode of an operation without application of load to the engine), to increase an lubricating oil consumption ratio (an amount of injected lubricating oil), to purify the fuel from the fuel tank, and to change a fuel mixing ratio.

When the density and the micro carbon residue of the fuel change, then a combustion state in the engine changes, and the lubricating oil on the surface of cylinder liner is lack to cause seizure of the cylinder with a piston ring by, for example, contact or approach of a flame with or to an inner wall of the cylinder liner. Therefore, it is possible to prevent seizure or the like by reducing the load or increasing the lubricating oil consumption ratio based on a real-time measurement result of the density and the micro carbon residue of the fuel when a fuel other than the specified fuels is injected.

Furthermore, when a plurality of fuels different in composition are used, a change of a mixing ratio of the fuels or the like can be made.

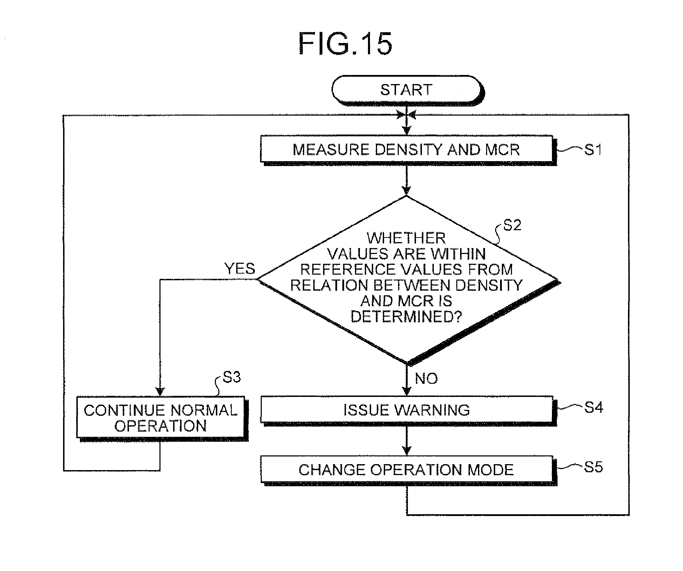

Steps of evaluating fuel soundness according to the present invention are described with reference to FIG. 15. As shown in FIG. 15, at a first step, the density and the micro carbon residue (MCR) of the fuel are measured in real time (S1).

At a second step, the control device 13 determines whether the density and the micro carbon residual (MCR) are within their respective reference values in the range of soundness ($D=3.8\times MCR-925\pm12$) as a result of measuring values of the density and the micro carbon residue (MCR) of the fuel (S2).

When the density and the MCR are within the respective reference values, the control device 13 determines that the fuel is favorable, controls the diesel engine to continue the current normal operation, and returns to S1 (S3).

On the other hand, when the density and the MCR are not within the respective reference values (in FIG. 14), the control device 13 determines that the soundness of the fuel is not favorable and issues a warning (S4). Subsequent to this warning, the control device 13 changes the operation mode and returns to S1 (S5).

As an example of how to change the diesel engine operation mode, a valve $V_2$ is opened and a valve $V_1$ is closed, and a line is changed from a first channel $L_1$ to a second channel $L_2$ as shown in FIG. 1.

Furthermore, by switching of a switch valve 17, the fuel F is passed through a first purifier 15-1 and a first filter 16-1 and thereby purified.

When the soundness of the fuel is not recovered even after this purification, the switch valve 17 is released, the fuel F is passed through both the second line $L_2$ of the first purifier 15-1 and the first filter 16-1 and a third line $L_3$ of a second purifier 15-2 and a second filter 16-2, thereby further improving purification efficiency of the fuel F.

Line switching is not limited to that shown in FIG. 1, and it is also possible that a plurality of lines as well as those shown in FIG. 1 are prepared and line switching can be performed by using these lines. Alternatively, the fuel can be passed through one of the second and third lines, that is, the second line $L_2$ whereas maintenance can be done on the second purifier 15-2 and the second filter 16-2 of the other third line $L_3$.

In this example, a purifier is means for performing pulverization, dispersion, homogenizing and the like on soft sludge in low-quality and inferior heavy oil and for performing microfiltration and precision cleaning thereon while rotating a precision perforated plate element at a high speed, and drains hard impurities and carbon having specific gravity difference as drain without filtering them. After passing the fuel F through this purifier, the fuel F is further subjected to filtration by the filter, thereby purifying it and changing the fuel composition thereof.

As described above, according to the present invention, the fuel properties (density and MCR) are measured online in predetermined portions in a fuel supply piping, the soundness of the fuel is evaluated based on this measurement result, and the operation mode is changed when the soundness is determined to be inferior. With this configuration, for example, even when a ship is under way, it is possible to change an operation mode of the diesel engine online according to the fuel properties, to prevent decreased reliability due to an increase in thermal load on the combustion chamber, and to improve the reliability of the engine. The fuel is not limited to a marine fuel but can be used as a land fuel.

Therefore, differently from conventional techniques with which fuel properties cannot be measured online, it is possible to avoid continuing unsure operations and to ensure stable navigation.

Industrial Applicability

As described above, according to the present invention, it is possible to change an operation mode of a diesel engine online according to its fuel properties, to prevent decreased reliability due to an increase in heat load applied to a combustion chamber, and to improve the reliability of the engine.

Reference Signs List

| | |
|---|---|
| 10 | diesel engine fuel soundness control system |
| 11 | density measuring instrument |
| 12 | MCR measuring instrument |
| 13 | control device (CPU) |

**Claims**

1. A diesel engine fuel soundness control system comprising:

   a density measuring instrument that measures a density of a fuel of a diesel engine in real time;
   a micro carbon residue (MCR) measuring instrument that measures an MCR in a fuel of a diesel engine in real time; and
   a control device that changes an operation mode of a diesel engine if measured values of the density and the micro carbon residue (MCR) of the fuel are out of a range of soundness of a density-to-MCR characteristic map obtained in advance.

2. The diesel engine fuel soundness control system according to claim 1, wherein the density of the fuel is measured by an ultrasonic wave velocity meter or a dielectric constant meter.

3. The diesel engine fuel soundness control system according to claim 2, wherein a measurement result of the density measuring instrument is subjected to temperature calibration.

4. The diesel engine fuel soundness control system according to claim 1, wherein a micro carbon residue (MCR) is obtained by an intensity ratio of light transmission of the fuel.

5. A diesel engine fuel soundness evaluation method comprising:

   measuring a density and a micro carbon residue (MCR) of a fuel of a diesel engine in real time;
   obtaining values of the density and the micro carbon residue (MCR) of the fuel; and
   changing an operation mode of the diesel engine when an obtained result indicates that values of the density and the micro carbon residue (MCR) of the fuel are out of a range of soundness.

6. The diesel engine fuel soundness evaluation method according to claim 5, wherein a range of the soundness satisfies a density (D)=X1×MCR-X2±X3, where X1 denotes a proportional coefficient, X2 denotes a density coefficient, and X3 denotes a fuel permissible range coefficient.

# FIG.1

# FIG.2A

# FIG.2B

ULTRASONIC WAVE VELOCITY
(t)

# FIG.3

# FIG.4

# FIG.5

# FIG.6

# FIG.7

# FIG.8

# FIG.9

# FIG.10

Benzene

Naphthalene

Anthracene

Naphthacene

Pentacene

EP 2 366 882 A1

# FIG.11

# FIG.12

## FIG.13

E: MCR<0.01
F: MCR=0.04
G: MCR=0.87

## FIG.14

EXAMPLE OF D=3.8×MCR-925±12

# FIG.15

```
                    START

        MEASURE DENSITY AND MCR          S1

                WHETHER                  S2
            VALUES ARE WITHIN
         REFERENCE VALUES FROM
YES     RELATION BETWEEN DENSITY
           AND MCR IS
           DETERMINED?

                        NO

  S3

CONTINUE NORMAL        ISSUE WARNING      S4
  OPERATION

                    CHANGE OPERATION MODE  S5
```

<table>
<tr><td colspan="2" align="center">**INTERNATIONAL SEARCH REPORT**</td><td colspan="2">International application No.<br>PCT/JP2009/070565</td></tr>
<tr><td colspan="4">A. CLASSIFICATION OF SUBJECT MATTER<br>*F02D45/00*(2006.01)i, *G01M15/04*(2006.01)i</td></tr>
<tr><td colspan="4">According to International Patent Classification (IPC) or to both national classification and IPC</td></tr>
<tr><td colspan="4">B. FIELDS SEARCHED</td></tr>
<tr><td colspan="4">Minimum documentation searched (classification system followed by classification symbols)<br>F02D45/00, G01M15/04</td></tr>
<tr><td colspan="4">Documentation searched other than minimum documentation to the extent that such documents are included in the fields searched<br>  Jitsuyo Shinan Koho      1922–1996  Jitsuyo Shinan Toroku Koho   1996–2010<br>  Kokai Jitsuyo Shinan Koho  1971–2010  Toroku Jitsuyo Shinan Koho   1994–2010</td></tr>
<tr><td colspan="4">Electronic data base consulted during the international search (name of data base and, where practicable, search terms used)</td></tr>
</table>

C. DOCUMENTS CONSIDERED TO BE RELEVANT

| Category* | Citation of document, with indication, where appropriate, of the relevant passages | Relevant to claim No. |
|---|---|---|
| Y | JP 2008-267339 A (Sumitomo Construction Machinery Manufacturing Co., Ltd.), 06 November 2008 (06.11.2008), paragraphs [0033], [0034] (Family: none) | 1-6 |
| Y | JP 63-201353 A (Daihatsu Diesel Mfg. Co., Ltd.), 19 August 1988 (19.08.1988), Item of the "prior art" (Family: none) | 1-6 |
| Y | JP 51-39075 A (Kabushiki Kaisha Hokushin Denki Kabushiki Kaisha), 01 April 1976 (01.04.1976), entire text (Family: none) | 2-3 |

[X] Further documents are listed in the continuation of Box C.     [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>  08 January, 2010 (08.01.10) | Date of mailing of the international search report<br>  19 January, 2010 (19.01.10) |
|---|---|
| Name and mailing address of the ISA/<br>  Japanese Patent Office | Authorized officer |
| Facsimile No. | Telephone No. |

Form PCT/ISA/210 (second sheet) (April 2007)

**EP 2 366 882 A1**

**INTERNATIONAL SEARCH REPORT**

| | International application No. |
|---|---|
| | PCT/JP2009/070565 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-55815 A  (Advantest Corp.),<br>25 February 2000 (25.02.2000),<br>fig. 13, 14<br>& US 6476393 B1          & DE 19924583 A | 4 |
| A | JP 2005-240722 A  (Nissan Motor Co., Ltd.),<br>08 September 2005 (08.09.2005),<br>entire text; all drawings<br>(Family: none) | 1-6 |

Form PCT/ISA/210 (continuation of second sheet) (April 2007)